# EUROPÄISCHE PATENTANMELDUNG

(11) **EP 3 719 734 A1**
(43) Veröffentlichungstag der Anmeldung: **07.10.2020**
(21) Anmeldenummer: 19000528.0
(22) Anmeldetag: 20.11.2019
(51) Int. Cl.: G06Q 30/06

(54) **VERFAHREN ZUR OPTIMIERUNG EINES ELEKTRONISCHEN BESTELLSYSTEMS**

(30) Priorität: 04.04.2019 DE 102019002468
(71) Anmelder: Footfact.com GmbH, 59073 Hamm (DE)
(72) Erfinder: Burnic, Faik, DE- 59073 Hamm (DE)
(74) Vertreter: Kayser, Christoph

(57) **Zusammenfassung**

Ein Verfahren zur Optimierung eines elektronischen Bestellsystems für Bekleidung, mit den Schritten:
- Bereitstellen eines Web-Shops auf einem Web-Shop-Server, in dem Bekleidung angeboten wird;
- Bereitstellen eines Nutzer-Endgerätes mit einem Clientprogramm zur Kommunikation mit dem Web-Shop;
- Bereitstellen eines elektronischen Kommunikationsnetzes zum Verbinden von Client und Server;
- Bereitstellen eines elektronischen Auswahlsystems zum nutzerseitigen Auswählen eines in dem Web-Shop angebotenen Bekleidungsstücks, wobei die Auswahl des Bekleidungsstücks in Abhängigkeit von einer Größenangabe erfolgt,
- Bereitstellen des elektronischen Bestellsystems für den Server und den Client zur Auslösung einer verbindlichen Bestellung des größenabhängig ausgewählten Bekleidungsartikels;
ist dadurch gekennzeichnet, dass das Clientprogramm vor dem Auswählen eines in dem Web-Shop angebotenen Bekleidungsstücks vom Nutzer wenigstens einen spezifischen Größenwert abfragt und dem Web-Shop-Server übermittelt, wobei der Web-Shop-Server das elektronische Auswahlsystem in Abhängigkeit vom spezifischen Größenwert steuert, derart, dass dem Nutzer bei einer Suchanfrage ausschließlich an den übermittelten Größenwert angepasste Bekleidungsstücke zur Auswahl angeboten werden.

## Beschreibung

Die vorliegende Erfindung betrifft ein Verfahren zur Optimierung eines elektronischen Bestellsystems für Bekleidung, mit den Schritten, Bereitstellen eines Web-Shops auf einem Web-Shop-Server, in dem Bekleidung angeboten wird; Bereitstellen eines Nutzer-Endgerätes mit einem Clientprogramm zur Kommunikation mit dem Web-Shop; Bereitstellen eines elektronischen Kommunikationsnetzes zum Verbinden von Client und Server; Bereitstellen eines elektronischen Auswahlsystems zum nutzerseitigen Auswählen eines in dem Web-Shop angebotenen Bekleidungsstücks, wobei die Auswahl des Bekleidungsstücks in Abhängigkeit von einer Größenangabe erfolgt; Bereitstellen des elektronischen Bestellsystems für den Server und den Client zur Auslösung einer verbindlichen Bestellung des größenabhängig ausgewählten Bekleidungsartikels.

Ein solches Verfahren ist aus dem Stand der Technik nicht bekannt.

Wenn eine Person beispielsweise im Internet auf einem Käuferportal ein Paar Schuhe bestellen bzw. kaufen will, wird diese Person bei ihrer Auswahl dazu aufgefordert, ihre Schuhgröße anzugeben. Dafür greift die Person auf die ihr bekannte übliche Schuhgröße zurück. Ihre Auswahl basiert also auf Erfahrungswerten. Zudem vertraut die Person darauf, dass eine im Käuferportal angebotene Umrechnungstabelle zwischen international verwendeten Schuhgrößensystemen korrekt ist. So kann in einer solchen Umrechnungstabelle z.B. die deutsche Schuhgröße 45, als US-Schuhgröße 11,5 und/oder als britische Schuhgröße 10,5 angegeben sein. Diese Umrechnung ist weder international standardisiert noch haben Hersteller sich auf ein einheitliches System von Größenangaben geeinigt, welches bestimmte Größen, z.B. Längen und Breitenangaben eines Fußes, gleichermaßen in einer standardisierten/genormten Schuhgröße widergibt. Deshalb sind aus einer üblichen Umrechnungstabelle für den Schuhkauf nur bedingt verwertbare Aussagen hinsichtlich der zu erwartenden tatsächlichen Schuhgröße oder Passform abzuleiten.

Demzufolge ist aufgrund der globalen Herstellung von Schuhen für internationale Märkte die korrekte Berechnung und vor allem Umrechnung der Schuhgrößen nicht immer gewährleistet. Dieses Problem resultiert darin, dass der Person die aufgrund ihrer üblichen Schuhgröße bestellten Schuhe nicht passen und diese daher wieder an das Käuferportal zurückgesendet werden. Die aus diesem Grunde durchgeführten Retouren sind erheblich und erzeugen nicht nur Kosten, sondern auch mehr Verkehr, eine höhere Umweltbelastung und unter Umständen auch mehr Abfall. Häufig werden retournierte Artikel gar nicht mehr bis zum Hersteller zurückgeführt, sondern vorher einfach entsorgt.

Die Aufgabe der vorliegenden Erfindung ist daher, ein Verfahren zur Optimierung eines elektronischen Bestellsystems für Bekleidung derart weiterzubilden, dass weitestgehend größenmäßig passende Bekleidungstücke ausgewählt werden können.

Die Aufgabe wird dadurch gelöst, dass das Clientprogramm vor dem Auswählen eines in dem Web-Shop angebotenen Bekleidungsstücks vom Nutzer wenigstens einen spezifischen Größenwert abfragt und dem Web-Shop-Server übermittelt, wobei der Web-Shop-Server das elektronische Auswahlsystem in Abhängigkeit vom spezifischen Größenwert steuert, derart, dass dem Nutzer bei einer Suchanfrage ausschließlich an den übermittelten Größenwert angepasste Bekleidungsstücke zur Auswahl angeboten werden.

Mit dem erfindungsgemäßen Verfahren ist es möglich, auf relativ einfache Weise die genaue Größe eines zu vermessenden Körpergliedes zu bestimmen und dadurch die Anzahl der Rücksendungen im Internet-Handel deutlich zu vermindern. Ein sehr großer Anteil der Rücksendungen von Kleidungsstücken erfolgt aufgrund nicht passender Größen. Die einfache, genaue Vermessung eines Körpergliedes und die Nutzung der sich aus dieser Vermessung ergebenden genauen Maße bei der Suche nach Kleidungsstücken in einem Käuferportal verringert das Risiko, nicht-passende Kleidungsstücke auszuwählen und zurückschicken zu müssen.

Es ist auch ein Vorteil der vorliegenden Erfindung, dass der Schritt des Abfragens eines spezifischen Größenwertes eine optische Vermessung eines Körperteils umfasst. Durch eine optische Vermessung lassen sich geometrische Größen z.B. ohne Maßband, über eine gewisse Entfernung erfassen.

Es ist auch ein Vorteil der vorliegenden Erfindung, dass der Schritt der optischen Vermessung eines Körperteils ein Digitalisieren des Körperteils und ein Berechnen des spezifischen Größenwertes des Körperteils anhand digitaler Bilddaten umfasst. Digitale Bilddaten sind besonders geeignet, um Körperformen zu berechnen.

Ein weiterer Vorteil der vorliegenden Erfindung ist, dass das Digitalisieren des Körperteils einen Schritt des Aufnehmens eines digitalen Bildes von dem spezifischen Körperteil mit einer digitalen Kamera und ein Übertragen des dem digitalen Bild zugrundeliegenden digitalen Datensatzes an eine Recheneinrichtung umfasst. Dadurch kann eine handelsüblich digitale Kamera verwendet werden, z.B. eine Kamera eines mobilen Endgerätes, wie einem Smartphone oder Tablet.

Es ist auch ein Vorteil der vorliegenden Erfindung, dass nach dem Schritt des Übertragens des dem digitalen Bild entsprechenden digitalen Datensatzes an eine Rechnereinrichtung aus dem digitalen Datensatz in der Rechnereinrichtung unter Verwendung eines Algorithmus der spezifische Größenwert berechnet wird. Dadurch ist es möglich, dass die Fußgröße durch den spezifischen Größenwert so wiedergebeben wird, dass dieser Wert die übliche Schuhgröße als Bestellgrundlage ersetzen kann oder sie passgenau bestimmt.

Ein weiterer Vorteil der vorliegenden Erfindung ist, dass der Schritt des Aufnehmens eines digitalen Bildes von dem spezifischen Körperteil das Aufnehmen eines Referenzobjekts mit wenigstens einer bekannten Referenzgröße umfasst. Es gibt im Besitz jedes Benutzers eine Vielzahl von Referenzobjekten mit wenigstens einer bekannten Referenzgröße. Dieser Sachverhalt ist der Normung geschuldet, der viele Gegenstände des täglichen Bedarfs unterliegen. So eignen sich für die vorliegende Erfindung im Grunde alle hinsichtlich ihrer Größe genormten Gegenstände. Wenn diese für die Aufnahme durch eine digitale Kamera neben oder unter das aufzunehmenden Körperteil gelegt werden und zusammen mit dem Körperteil aufgenommen werden, kann die Recheneinrichtung den genormten Gegenstand erkennen und anhand der bekannten, wenigstens einen Referenzgröße durch einen mathematischen Algorithmus die Größe des neben dem Referenzobjekt angeordneten Körperteils berechnen.

Es ist zudem ein Vorteil, dass beim Abfragen wenigstens eines spezifischen Größenwertes das Nutzer-Endgerät mithilfe des Clientprogramms mit einem zweiten Server verbunden wird, auf dem der wenigstens eine spezifische Größenwert gespeichert ist. Dadurch kann das Verfahren nicht nur in einer Desktop-Version sondern auch in einer Mobilen-Version zum Einsatz kommen, z.B. als App auf einem Smartphone oder Tablet.

Mit der vorliegenden Erfindung ist es möglich, den spezifischem Größenwert eines Körperteils mit oder ohne Referenzobjekt zu bestimmen und als Grundlage für eine Online-Bestellung zu verwenden. Wenn ein Referenzobjekt verwendet wird, dann kann dieses beliebig gestaltet sein.

Zudem kann mit der vorliegenden Erfindung ein digitales Archiv bereitgestellt werden, in welchem Bekleidungsstücke mit deren metrischen Größen archiviert sind und eine Synchronisation zwischen der von einem Benutzer ermittelten Größe seines Körperteils und einer Suchanfrage des Benutzers auf einem Käuferportal in Abhängigkeit von den im Archiv hinterlegten metrischen Größen des gesuchten Bekleidungsstücks erfolgt. Dadurch wird vermieden, dass Abweichungen der tatsächlichen metrischen Größe eines Bekleidungsstücks von der ausgewiesenen Kleidergröße zu Fehlentscheidungen und damit verbundenen Rücksendungen führen.

Eine Ausführungsform der vorliegenden Erfindung wird im Folgenden anhand der Zeichnung näher beschrieben. Es zeigen:
Fig. 1 ein schematisches Ablaufdiagramm einer Desktop-Version der vorliegenden Erfindung;
Fig. 2 ein schematisches Ablaufdiagramm einer mobilen Version der vorliegenden Erfindung;
Fig. 3 ein schematisches Ablaufdiagramm einer Version als moible Seamless Integration; und

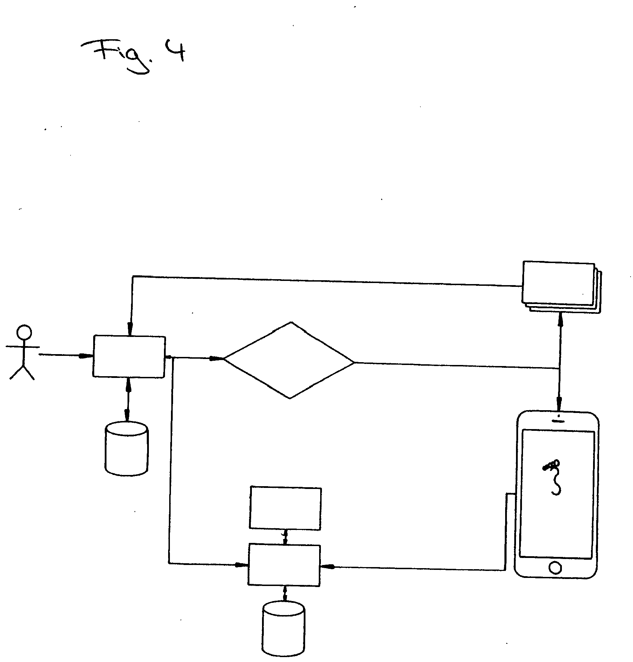

Fig. 4 eine schematische Darstellung Hardware-Lösung für Erzeugung eines spezifischen Größenwertes.

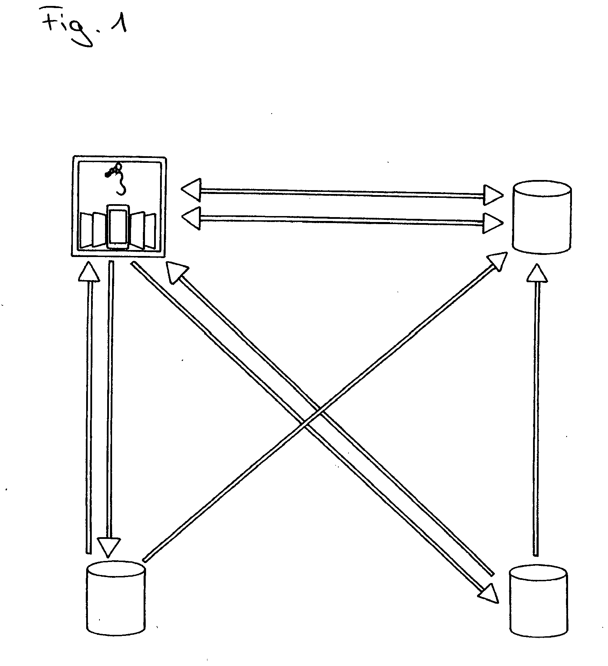

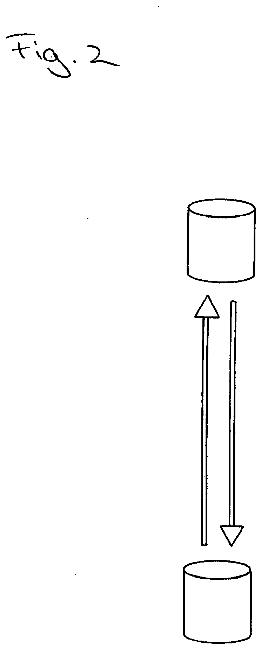

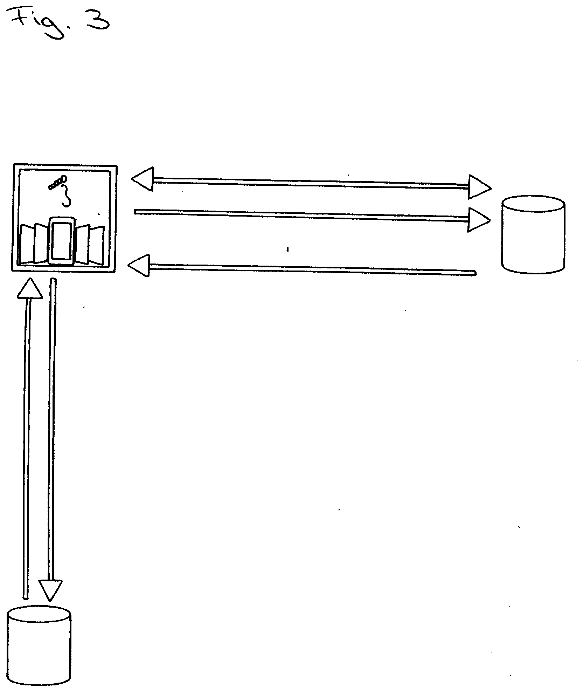

In Fig. 1 ist ein schematisches Ablaufdiagramm einer Desktop-Version, in Fig. 2 einer mobilen Version und in Fig. 3 einer Version als mobile Seamless Integration dargestellt, um das Verfahren der vorliegenden Erfindung beispielhaft zu beschreiben. Das erfindungsgemäße Verfahren wird zudem beispielhaft für die Bestellung von Schuhen erläutert, ist aber nicht auf die Bestellung von Schuhen beschränkt. Mit dem Verfahren der vorliegenden Erfindung können auch andere Bekleidungsstücke oder ganz andere größenrelevante Artikel bestellt werden.

Der Kunde/die Kundin sucht sich einen Schuh aus und möchte die passende Schuhgröße ermitteln (1). Dazu steht ihm/ihr eine App auf einem Nutzer-Endgerät des Kunden/der Kundin zur Verfügung, die vorher dort installiert wurde oder der Kunde/die Kundin wird von dem Webshop/Kundenportal zu der App weitergeleitet (2). Im Webshop/Kundenportal wird dem Kunden/der Kundin ein Barcode, QR-Code oder sonstiger scanbarer Zeichencode angezeigt, den dieser/diese mit ihrem Nutzer-Endgerät scannt (3). Mithilfe des Barcodes oder anderen Codes wird zur eindeutigen Identifikation der Sitzung (des aktuellen Bestellvorgangs) ein Token angefragt (4). Ein Backendsystem erstellt den Token anhand der Barcodedaten (5). Der Kunde/die Kundin erstellt dann mit dem Nutzer-Endgerät bzw. der darin eingebauten digitalen Kamera ein Foto von dem betreffenden Körperteil, also hier dem Fuß. Mithilfe der App werden Länge und Breite des Fußes ermittelt (6). Die digitalen Bilddaten zu dem Foto (digitalen Bild), also ein spezifischer Größenwert aus Länge und Breite, sowie die digitalen Daten zu dem ausgewählten Schuhmodel werden an das Backendsystem übermittelt (7). Das Backendsystem ermittelt anhand der übermittelten Daten die richtige Schuhgröße bzw. gleicht den spezifischen Größenwert aus Länge und Breite mit den Schuhgrößen des Schuhmodells in einer Datenbank des Backendsystems ab (8). Das Backendsystem übermittelt dann die passende Schuhgröße an die App (9). Die App zeigt für das ausgewählte Schuhmodell die passende Schuhgröße an (10). Der Kunde/die Kundin wird zum Webshop zurückgeleitet und es wird ihm/ihr die passende Schuhgröße im Webshop angezeigt (11).

In Fig. 3 ist beispielhaft ein System schematisch dargestellt, das in dem erfindungsgemäßen Verfahren zum Einsatz kommen kann. In der bevorzugten Ausführungsform wird eine Webapplikation 1 bereitgestellt, die von dem Benutzer 3 eines Smartphones 5 heruntergeladen wird. Mithilfe dieser Webapplikation 1 kann der Benutzer 3 mit einer auf dem Smartphone 5 integrierten digitalen Kamera 7 ein Foto von zum Beispiel seinem Fuß aufnehmen. Das erfindungsgemäße System umfasst ein Referenzobjekt 9, das vorzugsweise ein genormter Gegenstand ist, wie zum Beispiel eine Münze, eine Kreditkarte, ein Blatt Papier (z.B. DINA4, US Letter) oder dergleichen. Vor der Aufnahme z. B. des Fußes mit der im Smartphone 5 integrierten digitalen Kamera 7 legt der Benutzer 1 den genormten Gegenstand als Referenzobjekt 9 neben oder unter seinen Fuß, sodass im Suchfeld der Kamera 7 bzw. des Objektivs der Kamera 7 (nicht dargestellt) sowohl das Referenzobjekt 9 im Ganzen als auch der Fuß zu sehen sind. Dann drückt der Benutzer 3 auf einen Auslöser 11 und nimmt den Fuß und das vollständig neben oder unter dem Fuß liegende Referenzobjekt 9 auf. Das in dem Suchfeld der Kamera 5 befindliche Bild wird nach der Aufnahme zu einem digitalen Datensatz, der durch eine Übertragungseinrichtung 13 für digitale Daten an eine Recheneinrichtung 15 übertragen wird. Diese berechnet aus zumindest einigen der digitalen Daten des digitalen Datensatzes die Größe optional auch das Volumen des Körpergliedes. Das System umfasst auch eine elektronische Anzeigeeinrichtung 17 zur Anzeige des Körperteils und optional auch der Größe des aufgenommenen Körperteils und der ermittelten Körpergröße.

Die Übertragungseinrichtung 13 umfasst die in einem App-Speicher 19 vorhandene Webapplikation 1. Diese ist so programmiert, dass eine Vielzahl von Referenzobjekten 9 mit wenigstens einer bekannten Referenzgröße hinterlegt ist. Bei der 2D-Aufnahme des Fußes mit dem vom Benutzer 3 gewählten Referenzobjekt 9, erkennt die Webapplikation 1 das aufgenommene Referenzobjekt 9 aus der Vielzahl von Referenzobjekten 9 und dessen wenigstens eine Referenzgröße. Die Webapplikation 1 umfasst auch einen Algorithmus, mit dessen Hilfe aus der wenigstens einen Referenzgröße des in der 2D-Aufnahme erkannten Referenzobjekts eine Berechnung des in der 2D-Aufnahme ebenfalls erkannten Fußes berechnet werden kann. Dazu werden die 2D-Aufnahmen (Bilder) elektronisch in 3D-Diagramme konvertiert. Eine solche Konvertierung kann durch im Handel erhältliche Bildbearbeitungsprogramme durchgeführt werden. Die in die Webapplikation 1 integrierte oder externe Recheneinrichtung 15 berechnet dann die genauen Maße der Länge, Breite und des Volumens des Fußes oder anderen Körperteils. Zu diesem Zweck enthält die Recheneinrichtung 15 auch eine Haut-Erkennungssoftware. Diese wird heute z.B. in Sozialen Medien eingesetzt, um unerlaubte Nacktheit auf Fotos zu erkennen. Eine solche Software kann z.B. auf ein paar Phyton-Skripten, Programmierbibliotheken wie Open CV und der OCR-Software Tesseract basieren. Eine für die vorliegende Erfindung entwickelt Software kann Körperteile durch Hautumrisse erkennen und diese bedarfsweise mit einer Linie umgrenzen und auf der Anzeigeeinrichtung 17 darstellen. Wenn sich der mit der Kamera 7 aufzunehmende Körperteil bewegt, verändern sich die Perspektive und somit auch der Verlauf der Linie. Auch aus der auf diese Weise ermittelten Kontur lässt sich rechnerisch die Größe und das Volumen des Körperteils ermitteln, so dass auf ein Referenzobjekt 9 ganz verzichtet werden kann.

In anderen Ausführungsformen kann auf diese Weise ein beliebiges anderes Körperteil und gegebenenfalls sogar ein beliebiges anderes Objekt vermessen werden.

Unabhängig von der Webapplikation 1 und dem Smartphone 5 wird in der Recheneinrichtung 15 selbst oder in einem mit der Recheneinrichtung 15 verbundenen Computernetzwerk eine Datenbank 21 (digitales Archiv) angelegt, in der eine unbegrenzte Anzahl von Kleidungsstücken, zum Beispiel Schuhe, Handschuhe, Kopfbedeckungen, Ober-und Unterwäsche aufgenommen sind. Kleidung ist im Handel mit einer einheitlichen aber in regelmäßigen Abständen veränderlichen Größenangabe versehen. Eine solche Größenangabe variiert auch unter den Vertriebsländern und unter den Produktionsländern. So kann ein Käufer nicht sicher sein, dass ein Kleidungsstück einer bestimmten ausgewiesenen Kleidungsgröße eines ersten Herstellers tatsächlich genauso groß ist wie das gleiche Kleidungsstück mit der gleichen ausgewiesenen Kleidungsgröße eines zweiten Herstellers. In der Datenbank 21 werden nunmehr unabhängig vom Hersteller Kleidungsstücke archiviert, denen neben den ausgewiesenen Kleidungsgrößen die tatsächlichen, metrischen oder nicht-metrischen Kleidungsgrößen zugewiesen sind. Es kann also sein, dass zwei gleiche Kleidungsstücke mit gleicher ausgewiesener Kleidungsgröße unterschiedliche metrische oder nicht-metrische Größen haben und/oder umgekehrt zwei gleiche Kleidungsstücke unterschiedlicher ausgewiesener Kleidungsgröße gleiche metrische oder nicht-metrische Größen haben.

Das erfindungsgemäße Verfahren unter Verwendung des erfindungsgemäßen Systems beinhaltet eine Synchronisation der mit dem System gemessenen Größe eines Körperteils mit der elektronischen Suchanfrage in einem Käuferportal 23 (Internet). Wenn also der Benutzer 3 in dem Käuferportal 23 eine elektronische Suchanfrage nach einem Kleidungsstück mit einer bestimmten ausgewiesenen Kleidungsgröße stellt, beinhaltet die Suchanfrage die tatsächlich gemessene Größe des Körperteils des Benutzers 3 (Suchenden) und gleicht eine elektronische Suchmaschine in dem Computernetzwerk (z.B. Internet) die Suchanfrage mit der in dem Archiv der Datenbank 21 hinterlegten tatsächlichen metrischen oder nicht-metrischen Größe des angefragten Kleidungsstücks ab (Synchronisation). Der Benutzer 3 erhält dann aufgrund seiner Suchanfrage eine Trefferliste mit Kleidungsstücken, die gegebenenfalls unterschiedliche ausgewiesene Kleidergrößen haben, tatsächlich aber zu der tatsächlich gemessenen Größe des Körperteils passen.

Das erfindungsgemäße System umfasst auch einen Speicher 25, in welchem die einmal tatsächlich gemessene Größe des betreffenden Körperteils gespeichert wird, sodass der Benutzer 3 nicht mehr bei jedem Kaufvorgang im Internet oder anderen Computernetzwerk eine optische Vermessung dieses Körperteils durchführen muss. Das erfindungsgemäße System kann dann immer auf die betreffende tatsächliche gemessene Körpergröße des betreffenden Körperteils in dem Speicher 25 zurückgreifen, um die Synchronisation mit der Suchanfrage durchzuführen.

Die technischen Vorgänge im Hintergrund sind allgemein bekannt und nicht Gegenstand der vorliegenden Erfindung. Voraussetzung für die vorliegende Erfindung ist in technischer Hinsicht die einfache und schnelle Erfassung der tatsächlichen Größe eines Körperteils und die Synchronisation von digitalen Daten der gemessenen Körperteilgröße mit den metrischen Größen der im digitalen Archiv gespeicherten Kleidungsstücke, unabhängig von deren Kleidergrößenangaben.

Der Begriff "metrische Größen" ist im Sinne der Erfindung als Oberbegriff für alle in einer Zivilisation üblichen Messgrößen gemeint, mit der vergleichbare absolute Messwerte zum Ausdruck gebracht werden können. In Zivilisationen, in denen keine metrischen Systeme verwendet werden (z.B. USA, GB), sollen diese im Sinne der Erfindung durch das dort übliche nicht-metrische System ersetzt werden.

### Bezugszeichenliste

- 1: Webapplikation
- 3: Benutzer
- 5: Smartphone
- 7: Kamera
- 9: Referenzobjekt
- 11: einen Auslöser
- 13: Übertragungseinrichtung
- 15: Recheneinrichtung
- 17: Anzeigeeinrichtung
- 19: App-Speicher
- 21: Datenbank
- 23: Käuferportal
- 25: Speicher

## Patentansprüche

1. Verfahren zur Optimierung eines elektronischen Bestellsystems für Bekleidung, mit den Schritten:
- Bereitstellen eines Web-Shops auf einem Web-Shop-Server, in dem Bekleidung angeboten wird;
- Bereitstellen eines Nutzer-Endgerätes mit einem Clientprogramm zur Kommunikation mit dem Web-Shop;
- Bereitstellen eines elektronischen Kommunikationsnetzes zum Verbinden von Client und Server;
- Bereitstellen eines elektronischen Auswahlsystems zum nutzerseitigen Auswählen eines in dem Web-Shop angebotenen Bekleidungsstücks, wobei die Auswahl des Bekleidungsstücks in Abhängigkeit von einer Größenangabe erfolgt,
- Bereitstellen des elektronischen Bestellsystems für den Server und den Client zur Auslösung einer verbindlichen Bestellung des größenabhängig ausgewählten Bekleidungsartikels;
**dadurch gekennzeichnet,**
**dass** das Clientprogramm vor dem Auswählen eines in dem Web-Shop angebotenen Bekleidungsstücks vom Nutzer wenigstens einen spezifischen Größenwert abfragt und dem Web-Shop-Server übermittelt, wobei der Web-Shop-Server das elektronische Auswahlsystem in Abhängigkeit vom spezifischen Größenwert steuert, derart, dass dem Nutzer bei einer Suchanfrage ausschließlich an den übermittelten Größenwert angepasste Bekleidungsstücke zur Auswahl
angeboten werden.

2. Verfahren nach Anspruch 1,
**dadurch gekennzeichnet,**
**dass** der Schritt des Abfragens eines spezifischen Größenwertes eine optische Vermessung eines Körperteils umfasst.

3. Verfahren nach Anspruch 2,
**dadurch gekennzeichnet,**
**dass** der Schritt der optischen Vermessung eines Körperteils ein Digitalisieren des Körperteils und ein Berechnen des spezifischen Größenwertes des Körperteils anhand digitaler Bilddaten umfasst.

4. Verfahren nach Anspruch 3,
**dadurch gekennzeichnet,**
**dass** das Digitalisieren des Körperteils einen Schritt des Aufnehmens eines digitalen Bildes von dem spezifischen Körperteil mit einer digitalen Kamera und ein Übertragen des dem digitalen Bild zugrundeliegenden digitalen Datensatzes an eine Recheneinrichtung umfasst.

5. Verfahren nach Anspruch 4,
**dadurch gekennzeichnet,**
**dass** nach dem Schritt des Übertragens des dem digitalen Bild entsprechenden digitalen Datensatzes an eine Rechnereinrichtung aus dem digitalen Datensatz in der Rechnereinrichtung unter Verwendung eines Algorithmus der spezifische Größenwert berechnet wird.

6. Verfahren nach Anspruch 4 oder 5,
**dadurch gekennzeichnet,**
**dass** der Schritt des Aufnehmens eines digitalen Bildes von dem spezifischen Körperteil das Aufnehmen eines Referenzobjekts mit wenigstens einer bekannten Referenzgröße umfasst.

7. Verfahren nach einem der vorstehenden Ansprüche,
**dadurch gekennzeichnet,**
**dass** beim Abfragen wenigstens eines spezifischen Größenwertes das Nutzer-Endgerät mithilfe des Clientprogramms mit einem Backendserver verbunden wird, auf dem der wenigstens eine spezifische Größenwert gespeichert ist.

8. Verfahren nach Anspruch 7,
**dadurch gekennzeichnet,**
**dass** im Backendserver ein Token erstellt wird, um einen Vorgang eindeutig zu identifizieren.

9. Verfahren nach Anspruch 8,
**dadurch gekennzeichnet,**
**dass** im Backendserver der spezifische Größenwert mit einer Bekleidungsgröße abgeglichen wird und die zu dem spezifischen Größenwert passende Bekleidungsgröße ermittelt.

10. Verfahren nach Anspruch 9,
dass der Backendserver die passen Bekleidungsgröße an die App und/oder an den Webshop übermittelt.

11. Verfahren nach einem der vorstehenden Ansprüche,
**dadurch gekennzeichnet,**
**dass** der spezifische Größenwert auf einer Anzeigeeinrichtung angezeigt wird.
